# EUROPEAN PATENT APPLICATION

(11) **EP 4 852 470 A1**
(43) Date of publication of application: **09.12.2026**
(21) Application number: 25760762.2
(22) Date of filing: 12.02.2025
(51) Int. Cl.: H04W 4/38, G06F 18/25, H04L 67/12, H04Q 9/00

(54) **SENSING FUSION METHOD, COMMUNICATION DEVICE, AND STORAGE MEDIUM**

(30) Priority: 26.02.2024 CN 202410210750
(71) Applicant: ZTE Corporation, Shenzhen, Guangdong 518057 (CN)
(72) Inventor: WEI, Hao, Shenzhen, Guangdong 518057 (CN); ZHANG, Mengjie, Shenzhen, Guangdong 518057 (CN)
(74) Representative: Ziebig Hengelhaupt Intellectual Property Attorneys Patentanwaltskanzlei PartGmbB
(86) International application number: PCT/CN2025/076954
(87) International publication number: WO 2025/180219

(57) **Abstract**

Provided are a sensing fusion method, a communication device, and a storage medium. The sensing fusion method is applied to a first sensing node, and comprises: acquiring first sensing information and second sensing information, wherein the first sensing information is sensing information obtained by sensing a sensing target by the first sensing node, and the second sensing information is sensing information obtained by sensing the sensing target by a second sensing node; fusing the first sensing information and the second sensing information to obtain fused sensing information of the sensing target; and sending the fused sensing information and global identity information of the sensing target to the second sensing node, wherein the global identity information is used for identifying the sensing target in a sensing network.

## Description

The present disclosure claims priority to Chinese Patent Application No. 202410210750.5, filed on February 26, 2024, the entire contents of which are incorporated herein by reference.

### TECHNICAL FIELD

The present disclosure relates to the technical field of communications, and in particular, to a sensing fusion method, a communication apparatus, and a storage medium.

### BACKGROUND

The integrated sensing and communication technology is increasingly attracting attention from academia, industry, and standardization organizations, and this technology will realize the integration of mobile communication networks, sensing networks, and computing power networks.

### SUMMARY

In a first aspect, a sensing fusion method is provided in the embodiments of the present disclosure, which is applied to a first sensing node. The sensing fusion method includes:
acquiring first sensing information and second sensing information, where the first sensing information is sensing information obtained by the first sensing node performing sensing on a sensing target, and the second sensing information is sensing information obtained by a second sensing node performing sensing on the sensing target;
combining the first sensing information and the second sensing information to obtain combined sensing information of the sensing target; and
sending the combined sensing information and global identity information of the sensing target to the second sensing node, where the global identity information is used to identify the sensing target in a sensing network.

In a second aspect, a sensing fusion method is provided in the embodiments of the present disclosure, which is applied to a second sensing node. The sensing fusion method includes:
sending second sensing information to a first sensing node, where the second sensing information is sensing information obtained by the second sensing node performing sensing on a sensing target; and
receiving combined sensing information and global identity information of the sensing target sent from the first sensing node; where the combined sensing information is obtained by combining first sensing information and the second sensing information; the first sensing information is sensing information obtained by the first sensing node performing sensing on the sensing target; and the global identity information is used to identify the sensing target in a sensing network.

In a third aspect, a communication apparatus is provided in the embodiments of the present disclosure. The communication apparatus includes: a memory and a processor, where the memory and the processor are coupled; the memory is configured to store computer programs; and the processor, upon executing the computer programs, implements the sensing fusion method according to any of the above-mentioned aspects.

In a fourth aspect, a computer-readable storage medium is provided in the embodiments of the present disclosure, the computer-readable storage medium stores computer program instructions, and the computer program instructions, upon being executed by a processor, the sensing fusion method according to any of the above-mentioned aspects is implemented.

In a fifth aspect, a computer program product is provided in the embodiments of the present disclosure, the computer program product includes computer program instructions, and the computer program instructions, upon being executed by a processor, the sensing fusion method according to any of the above-mentioned aspects is implemented.

### BRIEF DESCRIPTION OF THE DRAWINGS

In order to illustrate the technical solutions in the present disclosure more clearly, accompanying drawings needed to be used in some embodiments of the present disclosure will be introduced briefly below. Obviously, the described accompanying drawings below are merely accompanying drawings of some embodiments of the present disclosure, and for a person of ordinary skill in the art can obtain other accompanying drawings according to these accompanying drawings.
FIG. 1 is a schematic diagram of an architecture of a sensing fusion system according to some embodiments.
FIG. 2 is a flowchart of a sensing fusion method according to some embodiments.
FIG. 3 is a flowchart of another sensing fusion method according to some embodiments.
FIG. 4 is a flowchart of yet another sensing fusion method according to some embodiments.
FIG. 5 is a flowchart of yet another sensing fusion method according to some embodiments.
FIG. 6 is a schematic diagram of distribution of sensing nodes according to some embodiments.
FIG. 7 is a schematic diagram of another distribution of sensing nodes according to some embodiments.
FIG. 8 is a schematic diagram of yet another distribution of sensing nodes according to some embodiments.
FIG. 9 is a flowchart of yet another sensing fusion method according to some embodiments.
FIG. 10 is a flowchart of yet another sensing fusion method according to some embodiments.
FIG. 11 is a structural schematic diagram of a sensing fusion apparatus according to some embodiments.
FIG. 12 is a structural schematic diagram of another sensing fusion apparatus according to some embodiments.
FIG. 13 is a structural schematic diagram of a communication apparatus according to some embodiments.

### DETAILED DESCRIPTION

The technical solutions in the present disclosure will be described below clearly and completely in conjunction with the accompanying drawings in the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that in the present disclosure, wordings, such as "exemplarily" or "for example" and variations thereof are used to indicate examples, instances, or illustrations. Any embodiment or design solution described in the present disclosure as "exemplarily" or "for example", etc., should not be illustrated as being more preferred or advantageous over other embodiments or design solutions. Specifically, the usage of the wordings such as "exemplarily" or "for example" is intended to present relevant concepts in a concrete way.

Hereinafter, terms "first" and "second," etc., are used for descriptive purposes only, and are not to be understood as indicating or implying the relative importance or implicitly indicating a number of indicated technical features. Thus, features limited with wordings like "first" or "second," etc., may explicitly or implicitly include one or more of the feature(s).

In the description of the present disclosure, unless otherwise specified, "/" means an "or" relationship, for example, "A/B" may represent A or B. The term "and/or" herein is merely an association relationship for describing associated objects, indicating that three relationships may exist, for example, A and/or B may represent: only A; or both A and B; or only B. In addition, "at least one" means a number of one or more, and "plurality" means a number of two or more.

The integrated sensing and communication is based on existing sensing network architectures and communication waveforms, utilizes existing communication devices to realize sensing applications, and promotes the development of innovative application services.

In current applied sensing functions, due to the increase in the scale of the sensing network and the increase in the number of sensing targets, corresponding computing capabilities and data interaction volumes of sensing nodes and a sensing center need to be correspondingly increased. How to reduce the information interaction volume between sensing nodes and realize the combination of sensing information among the sensing nodes has still been rarely researched in the industry.

In view of the above technical problems, a sensing fusion method is provided in the embodiments of the present disclosure, in which first sensing information and second sensing information are combined through a first sensing node to obtain combined sensing information, and the first sensing node assigns global identity information to a sensing target, and sends the combined sensing information and the global identity information to a second sensing node, thus information interaction between the sensing nodes is realized, while the information processing baselines between the sensing nodes are reduced, and it makes the identity of the sensing target in the sensing fusion system easier to be identified.

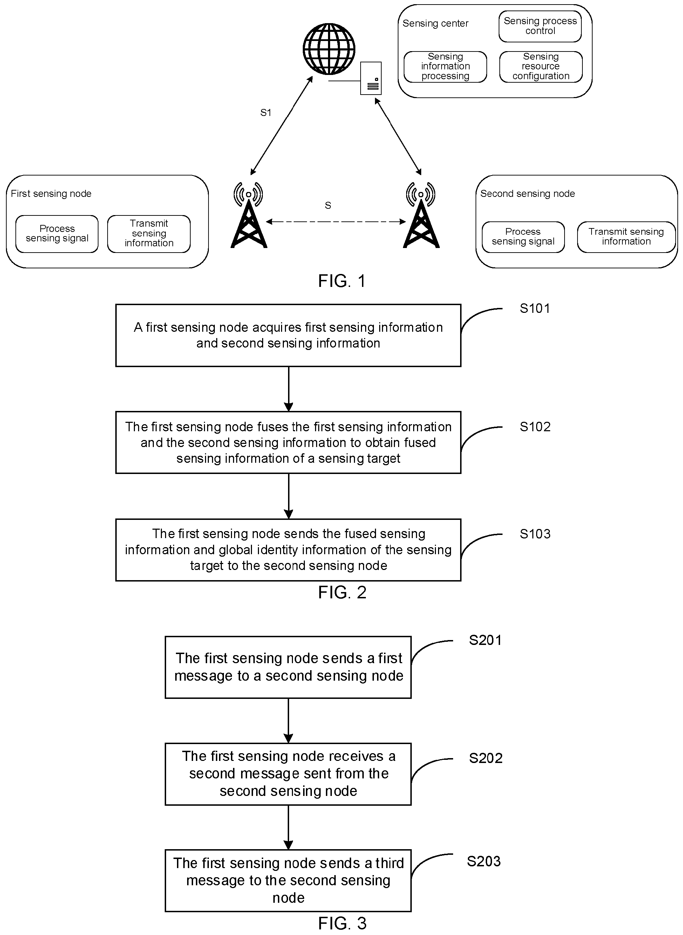

FIG. 1 is a schematic diagram of an architecture of a sensing fusion system according to some embodiments. As shown in FIG. 1, the system includes: sensing nodes and a sensing center.

In some embodiments, a user may perform a sensing demand operation at the sensing center (for example, the sensing demand operation is used to sense, within a preset range of a certain sensing node, a speed and trajectory of a sensing target such as a unmanned aerial vehicle). Correspondingly, the sensing center may, in response to the above sensing demand operation, send a sensing signal to the sensing nodes, thereby enabling the sensing nodes to process the sensing signal to sense the sensing target and obtain sensing information.

In some embodiments, a sensing node is further configured to transmit the sensing information to the sensing center or another sensing node.

It should be noted that a number of sensing nodes in the above sensing fusion system may be one or more. A sensing node may be a generation Node B (gNB) base station or user equipment (UE); the sensing target may be a unmanned aerial vehicle, a vehicle, a pedestrian, or the like, which moves in a sensing network formed by distributed sensing nodes. A number of sensing nodes and a type of sensing target are not limited in the present disclosure.

For example, taking the sensing nodes including a first sensing node and a second sensing node as an example, the locations of the first sensing node and the second sensing node may belong to a radio access network, and the sensing nodes form a distributed sensing network. A sensing node performs sensing on the sensing target and processes a sensing signal, and has an information connection channel with other adjacent sensing nodes, which may perform information interaction between nodes based on an Sn interface, and then transmit the sensing information to the sensing center based on an S1 interface.

In some embodiments, a number of second sensing nodes may be one or more, and the number of second sensing nodes is not limited in the present disclosure.

It should be noted that the Sn interface is a communication interface for transmitting information between a sensing node and a sensing node adjacent thereto, and the S1 interface is a communication interface for transmitting information between a sensing node and the sensing center.

In some embodiments, the sensing nodes may also be connected with each other through wired optical fibers, wireless links, or indirectly through the sensing center, and the present disclosure does not limit the connection manners between the sensing nodes.

In some embodiments, the sensing center performs sensing process control, sensing resource configuration, and sensing information processing on the various sensing nodes based on the S1 interface according to detailed sensing demands. The sensing center may be provided as a sensing network element in a core network, or may be located in a central equipment room of a certain area. The sensing center is a sensing control center and computing power server center for all sensing nodes in the area.

It should be noted that, the system architecture and application scenarios described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of the system architecture and the emergence of new service scenarios, the technical solutions provided in the embodiments of the present disclosure are also applicable to similar technical problems.

For example, the above sensing fusion system may also be a device-to-device (D2D) communication system, a vehicle to everything (V2X) communication system, or a system in which multiple systems are combined, etc., which is not limited by the embodiments of the present disclosure. The V2X communication system includes sub-fields such as vehicle to vehicle (V2V), vehicle to pedestrian (V2P), vehicle to infrastructure (V2I), etc.

In some embodiments, each device in the above communication system may be a UE (such as a mobile phone, a tablet computer, a desktop computer, a laptop computer, a handheld computer, a notebook computer, an ultra-mobile personal computer (UMPC), a netbook, and a cellular phone), an augmented reality (AR) device, a virtual reality (VR) device, or other devices having SL communication capabilities. The embodiments of the present disclosure do not impose special limitation on the form of each device in the above communication system.

Various devices in each of the above systems are sensing nodes in the embodiments of the present disclosure.

A sensing fusion method provided in the embodiments of the present disclosure will be described below with reference to the accompanying drawings.

Referring to FIG. 2, FIG. 2 is a flowchart of a sensing fusion method according to some embodiments, which is applied to a first sensing node. As shown in FIG. 2, the method includes S101 to S103.

In S101, the first sensing node acquires first sensing information and second sensing information.

The first sensing information is sensing information obtained by the first sensing node performing sensing on a sensing target, and the second sensing information is sensing information obtained by a second sensing node performing sensing on the sensing target.

In some embodiments, the sensing target may be a unmanned aerial vehicle, a vehicle, a pedestrian, or the like. The sensing target may move in a sensing network composed of distributed sensing nodes. The sensing information sensed by the sensing node may also vary with different sensing targets.

In some embodiments, the first sensing node performs a sensing task in response to a sensing signal, performs sensing on the sensing target, and obtains the first sensing information. The second sensing node performs a sensing task in response to the sensing information, performs sensing on the sensing target, and obtains the second sensing information.

In some embodiments, a user may perform a sensing demand operation at the sensing center (for example, the sensing demand operation is used to sense, within a preset range of a certain sensing node, a speed and trajectory of a sensing target such as a unmanned aerial vehicle). Correspondingly, the sensing center may, in response to the above sensing demand operation, send a sensing signal to the sensing nodes, thereby enabling the sensing nodes to process the sensing signal to sense the sensing target and obtain sensing information.

Further, after the second sensing node acquires the second sensing information, the second sensing node may actively send the second sensing information to the first sensing node, or may send the second sensing information to the first sensing node after receiving a reporting instruction sent from the first sensing node, and the present disclosure does not limit the reporting manner of the second sensing information.

As an example, the first sensing information may be used to characterize a movement trajectory of the sensing target within a sensing range of the first sensing node, and the second sensing information may be used to characterize a movement trajectory of the sensing target within a sensing range of the second sensing node.

The movement trajectory of the sensing target may include at least one location and speed of the sensing target, and the at least one location and speed of the sensing target may be represented by a sequence of trajectory points, such as [(Lo₁, La₁, H₁, V₁), (Lo₂, La₂, H₂, V₂), ..., (Loₜ, Laₜ, Hₜ, Vₜ), ..., (Loₙ, Laₙ, Hₙ, Vₙ)].

Loₜ represents a longitude of a sensing target trajectory point at a t-th moment, Laₜ represents a latitude of the sensing target trajectory point at the t-th moment, Hₜ represents a height of the sensing target trajectory point at the t-th moment, Vₜ represents a speed of the sensing target at a trajectory point (Loₜ, Laₜ, Hₜ) at the t-th moment, t=1,2, ..., n.

It should be noted that the above content included in the first sensing information and the second sensing information are merely exemplary, and in detailed implementation, the content included in the first sensing information and the second sensing information may also have other more or less content, which is not limited in the present disclosure.

In some embodiments, there is an overlapping area between a sensing area of the second sensing node and a sensing area of the first sensing node, or a distance between the second sensing node and the first sensing node is less than a preset distance threshold, and therefore the second sensing node is also referred to as an adjoint-sensing node of the first sensing node. The number of second sensing nodes may be one or more.

For example, taking the preset distance threshold being 200 meters as an example, in a case where a distance between any sensing node and the first sensing node is less than 200 meters, the sensing node is determined as a second sensing node, that is, the sensing node is an adjoint-sensing node of the first sensing node.

It should be noted that a sensing area of a sensing node may be a preset sensing area, may also be a circular area within a preset range centered on the current sensing node, and may also be an irregular area, and the present disclosure does not limit the range and type of the sensing area.

In some embodiments, since the number of second sensing nodes may be plural, the second sensing information may be a plurality of pieces of sensing information sensed by a plurality of second sensing nodes.

For example, in a case where the second sensing nodes include a sensing node A and a sensing node B, the second sensing information includes sensing information sensed by the sensing node A and sensing information sensed by the sensing node B. In a case where the second sensing nodes include a sensing node A, a sensing node B, and a sensing node C, the second sensing information includes sensing information sensed by the sensing node A, sensing information sensed by the sensing node B, and sensing information sensed by the sensing node C.

In S102, the first sensing node combines the first sensing information and the second sensing information to obtain combined sensing information of the sensing target.

In some embodiments, after acquiring the first sensing information and the second sensing information, in order to reduce duplicate sensing information in the first sensing information and the second sensing information, thereby reducing computation baselines of the sensing center, the first sensing node may fuse the first sensing information and the second sensing information to obtain the combined sensing information of the sensing target.

The combination for the first sensing information and the second sensing information by the first sensing node may be deduplication and merging for the first sensing information and the second sensing information.

For example, taking a case where both the first sensing information and the second sensing information include a trajectory point (Lo₁, La₁, H₁, V₁) of the sensing target as an example, the first sensing node may deduplicate the trajectory points and retain only one of the trajectory points.

Alternatively, the first sensing node may deduplicate the sensing information for overlapping sensing areas in the first sensing information and the second sensing information, and retain only one sensing area of the two identical sensing areas.

For example, if both the first sensing information and the second sensing information include sensing information for a sensing area 1, the first sensing node retains only one piece of sensing information for the sensing area 1 and removes another piece of sensing information for the sensing area 1.

As another example, the first sensing node retains sensing information with the highest sensing confidence level among various pieces of sensing information, and removes the other pieces of sensing information.

For example, taking a case where a first sensing confidence level is 0.7 and second sensing confidence levels include 0.5, 0.3, and 0.6 as an example, the first sensing node retains only the first sensing information with the sensing confidence level of 0.7, and removes the sensing information with the sensing confidence levels of 0.5, 0.3, and 0.6.

As another example, the first sensing node adds three-dimensional coordinates of the trajectory points of the sensing target and calculates an average value of various dimensions, retains an average trajectory point, and removes the original trajectory points.

For example, if the first sensing information includes a trajectory point (Lo1₁, La1₁, H1₁, V1₁) of the sensing target, and the second sensing information includes trajectory points (Lo2₁, La2₁, H2₁, V2₁), (Lo3₁, La3₁, H3₁, V3₁)and(Lo4₁, La4₁, H4₁, V4₁) of the sensing target, the first sensing node may combine the above trajectory points, retaining the trajectory points ( $\frac{Lo {1}_{1} + Lo {2}_{1} + Lo 3 + Lo {4}_{1}}{4} , \frac{La {1}_{1} + La {2}_{1} + La {3}_{1} + La {4}_{1}}{4}$, $\frac{H {1}_{1} + H {2}_{1} + H {3}_{1} + H {4}_{1}}{4} , \frac{V {1}_{1} + V {2}_{1} + V {3}_{1} + V {4}_{1}}{4}$) of the sensing target, and removing the original trajectory points (Lo2₁, La2₁, H2₁, V2₁), (Lo3₁, La3₁, H3₁, V3₁) 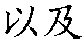 (Lo4₁, La4₁, H4₁, V4₁).

It should be noted that the above contents are only exemplary combination manners of sensing information. In detailed implementation, the combination manner of sensing information may also be other manners, and the present disclosure does not limit the combination manner of sensing information.

In S103, the first sensing node sends the combined sensing information and global identity information of the sensing target to the second sensing node.

The global identity information is used to identify the sensing target in a sensing network.

In some embodiments, after the first sensing node combines the first sensing information and the second sensing information to obtain the combined sensing information of the sensing target, the first sensing node assigns a global identity (i.e., a global-identity document (G-ID)) to the sensing target, and sends the combined sensing information and the global identity information of the sensing target to the second sensing node.

For example, the first sensing node may record a proprietary identifier (such as a graphic, a label, text, etc.) for the sensing target, and use the proprietary identifier as the global identity information of the sensing target, where the global identity information enables the sensing target to be recognized by all sensing nodes in the sensing network.

Based on the sensing fusion method provided in the embodiments of the present disclosure, the first sensing node combines the first sensing information and the second sensing information, which may effectively deduplicate the sensing information, not only reducing the computation baselines of the sensing network, but also improving the combination accuracy of the sensing information. Meanwhile, the first sensing node sends the combined sensing information obtained by combination to the second sensing node, so that the sensing information between the various nodes is interoperable, and sends the global identity information of the sensing target to the second sensing node, so that the identity of the sensing target in the sensing fusion system is easier to be identified, thereby avoiding repeated processing of the same sensing information by the first sensing node, reducing sensing workload, and realizing convenient interaction and efficient transmission of information between the sensing nodes.

Referring to FIG. 3, FIG. 3 is a flowchart of another sensing fusion method according to some embodiments. The sensing fusion method is applied to a first sensing node. As shown in FIG. 3, before the above S101, the method includes S201 to S203.

In S201, the first sensing node sends a first message to a second sensing node.

The first message is used to request to take the first sensing node as a combine sensing node (request to combine, RTC) corresponding to a sensing target, where the first message includes first sensing information, a first sensing confidence level, and first local identity information of the sensing target, and the combine sensing node is a node responsible for combining sensing information of the sensing target.

In some embodiments, before the first sensing node acquires the first sensing information and second sensing information, the first sensing node needs to send, based on whether the first sensing node satisfies a condition for being as the combine sensing node, the first message used to request to take the first sensing node as the combine sensing node corresponding to the sensing target to the second sensing node.

It should be noted that the establishment of the combine sensing node determines an anchor node of the sensing target in the sensing network, that is, there is a one-to-one correspondence between the sensing target and the combine sensing node.

It should be noted that the sensing confidence level is used to characterize a credibility of sensing information obtained by a sensing node processing a sensing signal, and a value range thereof may be a real number between [0, 1], where 0 represents the least credible and 1 represents the most credible. A sensing confidence level is related to a signal-to-noise ratio of a sensing signal acquired by a sensing node and a correlation between sensing parameters. Typically, the higher the signal-to-noise ratio of the sensing signal, the more relevant the sensing parameters are, and thus the higher the sensing confidence level is.

In some embodiments, the first sensing confidence level is a confidence level of the first sensing information, and the first local identity information is used to locally identify the sensing target at the first sensing node.

For example, the first sensing node may record a proprietary identifier (such as a graphic, a label, text, etc.) for the sensing target, and use the proprietary identifier as first local identity (i.e., a local-identity document (L-ID)) information of the sensing target, where the first local identity information enables the sensing target to be recognized by the first sensing node.

It should be noted that the global identity information of the sensing target may be recognized by all sensing nodes in the sensing network, and the first local identity information of the sensing target may only be recognized by the first sensing node.

As an example, the first sensing node assigns a local identity to the sensed sensing target, and calculates the first sensing confidence level of the first sensing information, and then the first sensing node sends the local identity information and the first sensing confidence level to the second sensing node.

In some embodiments, since the sensing information may be affected by the signal-to-noise ratio of the sensing signal, a spatial interference signal, equipment insertion loss, etc., there may be a gap between the sensing information sensed by the sensing node and the actual information of the sensing target.

In some embodiments, the signal-to-noise ratio of the sensing signal may characterize the sensing confidence level to a certain extent, that is, the higher the signal-to-noise ratio, the smaller the noise interference. For an actual sensing target, a travelling distance and speed of the sensing target are physically related, and therefore, a square of a difference of accumulated amounts of the travelling distance and speed of the sensing target over time may be calculated in signal processing, and the smaller the obtained value is, the more accurate the sensing information is, that is, the higher the sensing confidence level of the sensing information is.

In some embodiments, a calculation manner of the sensing confidence level is as shown in formula (1): $δ = exp \left(-{\sum }_{n = 1}^{N} \frac{1}{{γ}_{n}}*{\left|{ΔS}_{n}-{v}_{n}*Δt\right|}^{2}\right)$ Formula (1) N is a number of sensing coordinate points included in a certain segment of a target trajectory of the sensing target sensed by the sensing node, γₙ is a signal-to-noise ratio of a sensing signal at the n-th sensing coordinate point, ΔSₙ is a spatial flight distance of the sensing target from the n-th sensing coordinate point to a previous sensing coordinate point, vₙ is a flight speed of the sensing target at the n-th sensing coordinate point, and Δt is a duration between two adjacent sensing coordinate points.

As shown in formula (1), the higher the signal-to-noise ratio of the sensing signal, the more relevant the sensing parameters are, and the higher the sensing confidence level is.

Further, the first sensing node acquires the first sensing information sensed by the first sensing node and the second sensing information sensed by the second sensing node, matches and associates the first sensing information with the second sensing information. After calculating a difference between the first sensing confidence level and a second sensing confidence level of the second sensing information, the first sensing node sends the first message used to request to take the first sensing node as the combine sensing node corresponding to the sensing target to the second sensing node whose difference is less than a preset confidence threshold.

It should be noted that the preset confidence threshold is set by a vendor of the sensing fusion system and stored in a memory, and preset confidence thresholds set by different vendors of sensing fusion systems may be different, which is not limited by the present disclosure.

As an example, the preset confidence threshold may be -0.2.

As an example, the first sensing node sends, to a second sensing node for which a difference between the first sensing confidence level and the second sensing confidence level of the second sensing information is less than -0.2, the first message used to request to take the first sensing node as the combine sensing node corresponding to the sensing target.

In some embodiments, the first sensing node sends a message (reject, REJ) used to reject taking the first sensing node as the combine sensing node corresponding to the sensing target to a sensing node for which the difference between the first sensing confidence level and the second sensing confidence level is greater than the preset confidence threshold.

As an example, the first sensing node sends a message used to reject taking the first sensing node as the combine sensing node corresponding to the sensing target to a sensing node for which the difference between the first sensing confidence level and the second sensing confidence level is greater than -0.2.

In S202, the first sensing node receives a second message sent from the second sensing node.

The second message is a response message to the first message. The response message may be accepting to indicate to take the first sensing as the combine sensing node corresponding to the sensing target, or may be rejecting indicating to take the first sensing node as the combine sensing node corresponding to the sensing target.

In some embodiments, after the first sensing node sends the first message to the second sensing node, the second sensing node may determine, based on the first message, whether the first sensing node satisfies a condition for being as a combine sensing node. After determining that the first sensing node satisfies the condition for being as the combine sensing node, the second sensing node may send the second message to the first sensing node. Correspondingly, the first sensing node receives the second message sent from the second sensing node.

In S203, the first sensing node sends a third message to the second sensing node.

In some embodiments, after receiving second messages sent from second sensing nodes, the first sensing node sends the third message to the second sensing nodes based on all the second messages including the acceptance indication.

The third message is used to indicate that the first sensing node is the combine sensing node.

In some embodiments, the third message includes the global identity information of the sensing target and second local identity information of the sensing target, where the second local identity information is used to locally identify the sensing target at the second sensing node.

For example, the second sensing node may record a proprietary identifier (such as a graphic, a label, text, etc.) for the sensing target, and use the proprietary identifier as second local identity (i.e., a local-identity document (L-ID)) information of the sensing target, where the second local identity information may enable the sensing target to be recognized by the second sensing node.

It should be noted that the global identity information of the sensing target may be recognized by all sensing nodes in the sensing network (that is, the first sensing node and the second sensing node), the first local identity information of the sensing target may only be recognized by the first sensing node, and the second local identity information of the sensing target may only be recognized by the second sensing node.

As an example, after the first sensing node receives the second messages, if all messages in the second messages include acceptance indications (i.e., Accept (ACP)), the first sensing node is taken as a combine sensing node (C-SN).

For example, taking a case where the second sensing nodes include a sensing node A, a sensing node B, and a sensing node C as an example, the second messages include a message sent from the sensing node A, a message sent from the sensing node B, and a message sent from the sensing node C. If all of the message sent from the sensing node A, the message sent from the sensing node B, and the message sent from the sensing node C in the second messages include acceptance indications (i.e., ACP), it indicates that the first sensing node satisfies the condition for being as the combine sensing node, and the first sensing node is taken as the combine sensing node.

It should be noted that the combine sensing node sends the combined sensing information and the global identity information of the sensing target to the sensing center, so that the sensing center controls the sensing processes of the various sensing nodes by processing the combined sensing information and a sensing task demand of a user and reconfigures sensing resources of the various sensing nodes, thereby completing the sensing task.

Further, the first sensing node combines the sensing information sensed by all the sensing nodes to obtain combined sensing information, and assigns a global identity to the sensing target, and then the first sensing node sends the combined sensing information and the global identity information to the sensing center.

In some embodiments, the first sensing node also sends the combined sensing information, the global identity information, and the local identity information to the second sensing node, so as to realize information interaction between the various sensing nodes in the sensing network.

In some embodiments, after receiving the combined sensing information, the global identity information, and the local identity information, the second sensing node sends an acknowledge (ACK) to the first sensing node, and all the sensing nodes associate the global identity information with the local identity information of the sensing target, and continue to sense the sensing target and record sensing information of the sensing target.

In some embodiments, due to that there is an overlap between the sensing areas of the sensing nodes, there may be a case where other non-second sensing nodes sense the target. In a case where a difference between a first sensing confidence level of the first sensing node and a second sensing confidence level of the second sensing node is greater than the preset confidence threshold, the combine sensing node needs to be switched, and at this time, corresponding processing is performed by the second sensing node to ensure the uniqueness of the combine sensing node during a process of mobility management. If the combine sensing node is switched, a switching decision and instruction must be made by a current combine sensing node (that is, the first sensing node), and a new combine sensing node also needs to be selected from the current second sensing nodes.

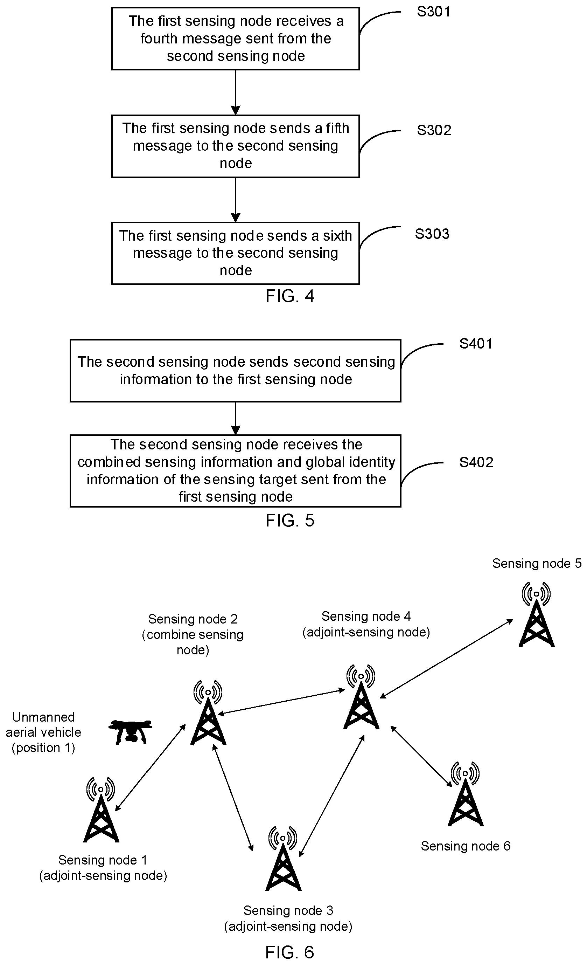

Referring to FIG. 4, FIG. 4 is a flowchart of another sensing fusion method according to some embodiments. The sensing fusion method is applied to a first sensing node, and is used to switch a combine sensing node. As shown in FIG. 4, the method includes S301 to S303.

In S301, the first sensing node receives a fourth message sent from the second sensing node.

In some embodiments, in a case where the first sensing node is the combine sensing node and the difference between the first sensing confidence level of the first sensing node and the second sensing confidence level of the second sensing node is greater than the preset confidence threshold, the second sensing node sends the fourth message to the first sensing node.

The fourth message is used to request the second sensing node to be as the combine sensing node of the sensing target, where the fourth message includes the second sensing information, the second sensing confidence level, and second local identity information of the sensing target, and the combine sensing node is a node responsible for combining sensing information of the sensing target.

In some embodiments, the second sensing confidence level is a confidence level of the second sensing information, and the second local identity information is used to locally identify the sensing target at the second sensing node.

Further, the first sensing node determines whether the second sensing node has sensed the sensing target based on the global identity information of the sensing target. For any second sensing node, if the second sensing node does not sense the sensing target, the second sensing confidence level of the second sensing node is 0.

Alternatively, for any second sensing node, after matching and associating the sensing target sensed by the second sensing node with a sensing target sensed by a second sensing node adjacent thereto, if it is found that a combine sensing node already exists, it is determined that the second sensing confidence level of the second sensing node adjacent thereto is 0.

In some embodiments, the first sensing node receives the fourth message sent from a sensing node for which a difference between the second sensing confidence level and the first sensing confidence level is less than the preset confidence threshold.

In some embodiments, the preset confidence threshold may be -0.2.

As an example, the first sensing node sends the fourth message including the second sensing information, the second sensing confidence level, and the second local identity information of the sensing target to a sensing node for which a difference between the second sensing confidence level and the first sensing confidence level is less than 0.2, so as to request the second sensing node to be as the combine sensing node of the sensing target.

In S302, the first sensing node sends a fifth message to the second sensing node.

The fifth message is a response message to the fourth message. The response message may be accepting to indicate to take the second sensing as a new combine sensing node corresponding to the sensing target, or may be rejecting indicating to take the second sensing as a new combine sensing node corresponding to the sensing target.

In some embodiments, after receiving the fourth message sent from the second sensing node, the first sensing node may determine, based on the fourth message, whether the second sensing node satisfies a condition for being as a new combine sensing node. After determining that the second sensing node satisfies the condition for being as the combine sensing node, the first sensing node may send the fifth message to the second sensing node. Correspondingly, the second sensing node receives the fifth message sent from the first sensing node.

In some embodiments, the first sensing node sends the fifth message to the second sensing node based on the first sensing confidence level and the second sensing confidence level.

As an example, the first sensing node may first determine, based on the first sensing confidence level and the second sensing confidence level, whether the second sensing node satisfies the condition for being as the combine sensing node, and send the fifth message to the second sensing node according to whether the second sensing node satisfies the condition for being as the combine sensing node.

The condition for the second sensing node for being as the combine sensing node includes: a difference between the first sensing confidence level and the second sensing confidence level being less than the preset confidence threshold.

As an example, in a case where the difference between the first sensing confidence level and the second sensing confidence level is less than -0.2, it is determined that the second sensing node satisfies the condition for being as the combine sensing node.

In some embodiments, in a case where the second sensing node satisfies the condition for being as the combine sensing node, the first sensing node sends the fifth message including an acceptance indication to the second sensing node.

In some embodiments, in a case where the second sensing node does not satisfy the condition for being as the combine sensing node, the first sensing node sends the fifth message including a rejection indication to the second sensing node.

In some embodiments, in a case where the first sensing node has already been the combine sensing node, the condition for the second sensing node for being as the combine sensing node further includes: the second sensing confidence level of the second sensing node is the maximum value among second sensing confidence levels of all the second sensing nodes.

In some embodiments, the first sensing node may determine that there is a target second sensing node among the second sensing nodes.

The target second sensing node is a sensing node with the highest sensing confidence level for the sensing target among all the second sensing nodes, and a difference between a sensing confidence level of the first sensing node for the sensing target and a sensing confidence level of the target second sensing node for the sensing target is less than the preset confidence threshold.

As an example, the sensing confidence level of the target second sensing node is the maximum value among the second sensing confidence levels, and the difference between the sensing confidence level of the first sensing node for the sensing target and the sensing confidence level of the target second sensing node for the sensing target is less than -0.2.

For example, taking a case where the second sensing nodes include a sensing node A, a sensing node B, and a sensing node C as an example, it is assumed that a sensing confidence level of sensing information of the sensing node A is 0.5, a sensing confidence level of sensing information of the sensing node B is 0.6, and a sensing confidence level of sensing information of the sensing node C is 0.7, if the first sensing confidence level is 0.8, the sensing node C among the second sensing nodes is determined as the target second sensing node, that is, the sensing node C is determined as the new combine sensing node, thereby avoiding frequent switching of the combine sensing node of the sensing target and ensuring the uniqueness of the combine sensing node.

In S303, the first sensing node sends a sixth message to the second sensing node.

In some embodiments, after the target sensing node is determined as the new combine sensing node, the first sensing node sends the sixth message to all the second sensing nodes. The sixth message is used to indicate that the combine sensing node is switched from the first sensing node to the target second sensing node, and the sixth message includes a node identifier of the target second sensing node and the global identity information of the sensing target.

Further, the new combine sensing node (that is, the target sensing node) combines the sensing information of all the sensing nodes to obtain combined sensing information, and sends the combined sensing information and the global identity information to the sensing center.

In some embodiments, the new combine sensing node (that is, the target sensing node) sends the combined sensing information and global identity information of the original combine sensing node (that is, the first sensing node) and the combined sensing information and global identity information of the new combine sensing node (that is, the target sensing node) to all the second sensing nodes, and the second sensing nodes send the global identity information to sensing nodes adjacent to the second sensing nodes, so that the adjacent sensing nodes subsequently exchanges sensing information.

In some embodiments, after receiving the combined sensing information, combine sensing node switching information, global identity information, and local identity information, the second sensing nodes send an acknowledgement (ACK) to the combine sensing node, and all the sensing nodes associate the global identity information with the local identity information of the sensing target, and continue to sense the sensing target and record sensing information of the sensing target.

It should be noted that, if the combine sensing node is switched, the new combine sensing node sends its own identity of the combine sensing node to a sensing node adjacent thereto, and determines the sensing node adjacent to the new combine node as a second sensing node. In this way, frequent switching of the combine sensing node for the sensing target is avoided, and stability of the sensing information combination process is ensured.

Referring to FIG. 5, FIG. 5 is a flowchart of another sensing fusion method according to some embodiments. The sensing fusion method is applied to a second sensing node. As shown in FIG. 5, the method includes: S401 to S402.

In S401, the second sensing node sends second sensing information to the first sensing node.

The second sensing information is sensing information obtained by the second sensing node performing sensing on the sensing target.

In some embodiments, before the second sensing node sends the second sensing information to the first sensing node, the second sensing node receives a first message sent from the first sensing node. The first message is used to request to take the first sensing node as a combine sensing node corresponding to the sensing target, and the combine sensing node is a node responsible for combining sensing information of the sensing target.

In some embodiments, the first message includes the first sensing information, a first sensing confidence level, and first local identity information of the sensing target, where the first sensing confidence level is a confidence level of the first sensing information; and the first local identity information is used to locally identify the sensing target in the first sensing node.

Further, after the second sensing node receives the first message sent from the first sensing node, the second sensing node sends a second message to the first sensing node. The second message is a response message to the first message.

As an example, the second sensing node sends the second message to the first sensing node based on the first sensing confidence level and a second sensing confidence level. The second sensing confidence level is a confidence level of the second sensing information.

As an example, the second sensing node may first determine, based on the first sensing confidence level and the second sensing confidence level, whether the first sensing node satisfies a condition for being as a combine sensing node. The condition for the first sensing node for being as the combine sensing node includes: a difference between the first sensing confidence level and the second sensing confidence level being less than the preset confidence threshold.

As an example, the preset confidence threshold may be -0.2.

For example, the second sensing node determines that the first sensing node satisfies the condition for being as the combine sensing node in a case where the difference between the first sensing confidence level and the second sensing confidence level is less than -0.2.

Further, in a case where the first sensing node satisfies the condition for being as the combine sensing node, the second sensing node sends the second message including an agreement indication to the first sensing node; or in a case where the first sensing node does not satisfy the condition for being as the combine sensing node, the second sensing node sends the second message including a rejection indication to the first sensing node.

As an example, in a case where the first sensing node satisfies that the difference between the first sensing confidence level and the second sensing confidence level is less than -0.2, the second sensing node sends the second message including an agreement indication to the first sensing node; or in a case where the first sensing node does not satisfy that the difference between the first sensing confidence level and the second sensing confidence level is less than -0.2 (for example, the difference between the first sensing confidence level and the second sensing confidence level is greater than -0.2), the second sensing node sends the second message including a rejection indication to the first sensing node.

In some embodiments, in a case where the first sensing node satisfies the condition of the combine sensing node the second sensing node, the second sensing node receives a third message sent from the first sensing node.

The third message is used to indicate that the first sensing node is the combine sensing node, and the third message includes the global identity information and second local identity information of the sensing target, where the second local identity information is used to locally identify the sensing target at the second sensing node.

Further, the second sensing node sends the sensed second sensing information to the first sensing node, and the first sensing node combines the second sensing information and the first sensing information to obtain combined sensing information.

Further, the first sensing node sends the combined sensing information to the second sensing node.

In S402, the second sensing node receives the combined sensing information and global identity information of the sensing target sent from the first sensing node.

The combined sensing information is obtained by combining the first sensing information and the second sensing information, the first sensing information is sensing information obtained by the first sensing node performing sensing on the sensing target, and the global identity information is used to identify the sensing target in a sensing network.

In some embodiments, after the second sensing node receives the global identity information sent from the first sensing node, an association relationship between the global identity information and the second local identity information is established.

In some embodiments, if the combine sensing node needs to be switched to a certain sensing node among second sensing nodes, the second sensing nodes receives a sixth message sent from the first sensing node. The sixth message is used to indicate that the combine sensing node of the sensing target is switched from the first sensing node to a target second sensing node, and the sixth message includes a node identifier of the target second sensing node and the global identity information of the sensing target, and the combine sensing node is a node responsible for combining sensing information of the sensing target.

In some embodiments, after determining the first sensing node as the combine sensing node of the sensing target, the second sensing node receives a seventh message sent from a third sensing node.

The third sensing node is a sensing node among the second sensing nodes that does not satisfy the condition for being as the combine sensing node, the seventh message is used to request to take the third sensing node as the combine sensing node, and the combine sensing node is a node responsible for combining sensing information of the sensing target.

In some embodiments, the second sensing node sends an eighth message including a rejection indication to the third sensing node. The eighth message is a response message to the seventh message.

As an example, since the third sensing node is a sensing node among the second sensing nodes that does not satisfy the condition for being as the combine sensing node, the second sensing node needs to reject the request of the third sensing node to request the combine sensing node, that is, the second sensing node sends the eighth message including a rejection indication to the third sensing node.

Based on the sensing fusion method provided in the embodiments of the present disclosure, the second sensing node sends the second sensing information to the first sensing node, so that the first sensing node may fuse the first sensing information and the second sensing information to obtain the combined sensing information, thereby enabling the second sensing node to receive the combined sensing information sent from the first sensing node, which reduces the computation baselines of the sensing fusion system and enhances information interaction between the sensing nodes. Meanwhile, according to the global identity information sent from the first sensing node, the second sensing node may accurately match the sensing target, achieving accurate positioning of the sensing target in the sensing fusion system.

Referring to FIG. 6, FIG. 6 is a schematic diagram of distribution of sensing nodes according to some embodiments. As shown in FIG. 6, taking a case where a total of 6 sensing nodes (a sensing node 1, a sensing node 2, a sensing node 3, a sensing node 4, a sensing node 5, and a sensing node 6) are deployed in a sensing network of the sensing fusion system, a sensing target is a unmanned aerial vehicle (UAV), and the unmanned aerial vehicle is at a position 1 as an example, the sensing nodes are connected to each other through links via an Sn interface.

In some embodiments, the sensing nodes in the sensing network realize, through distributed cooperation, the combination of sensing information of the unmanned aerial vehicle and the construction of a global identity, and in an initial sensing stage of the sensing network for the unmanned aerial vehicle, establishment of a combine sensing node needs to be performed.

For example, if the sensing node 1, the sensing node 2, and the sensing node 3 may all sense the unmanned aerial vehicle, the sensing node 1 assigns a local identity L-1-1 to the unmanned aerial vehicle, and calculates a sensing confidence level δ₁₋₁=0.6 of sensing information sensed by the sensing node 1.

As an example, the sensing node 2 assigns a local identity L-2-1 to the unmanned aerial vehicle, and obtains a sensing confidence level δ₂₋₁=0.85 of sensing information sensed by the sensing node 2, the sensing node 3 assigns a local identity L-3-1 to the unmanned aerial vehicle, and obtains a sensing confidence level δ₃₋₁=0.5 of sensing information sensed by the sensing node 3, and the sensing node 4 assigns a local identity L-4-1 to the unmanned aerial vehicle.

Further, the sensing node 1 sends the sensing information of the unmanned aerial vehicle to the adjacent sensing node 2, and sends a request to combine (RTC); the sensing node 2 sends the sensing information of the unmanned aerial vehicle to the adjacent sensing node 1, sensing node 3, and sensing node 4, and sends a request to combine (RTC); and the sensing node 3 sends the sensing information of the unmanned aerial vehicle to the adjacent sensing node 2 and sensing node 4, and sends a request to combine (RTC).

In some embodiments, the sensing node 1 matches and associates the sensing information of the unmanned aerial vehicle sent from the sensing node 2 with the unmanned aerial vehicle of the sensing node 1, and finds that the corresponding sensing target is the same, and thus calculates a difference between sensing confidence levels as Δ_{δ}=δ₁₋₁-δ₂₋₁=-0.25.

Similarly, the sensing node 2 calculates a difference between sensing confidence levels of the sensing node 2 and the sensing node 1 as Δ_{δ}=0.25, calculates a difference between sensing confidence levels of the sensing node 2 and the sensing node 3 as Δ_{δ}=-0.35, calculates a difference between sensing confidence levels of the sensing node 2 and the sensing node 4 as Δ_{δ}=0.85 (since the sensing node 4 does not sense the sensing target, it is considered that the sensing confidence level of the sensing node 4 is 0), the sensing node 3 calculates a difference between sensing confidence levels of the sensing node 3 and the sensing node 2 as Δ_{δ}=-0.35, and the sensing node 3 calculates a difference between sensing confidence levels of the sensing node 3 and the sensing node 4 as Δ_{δ}=0.35. The sensing node 4 matches and associates the sensing information of the sensing target sent from the sensing node 2 and the sensing node 3 with the sensing target sensed by the sensing node 4, and finds that the sensing node 4 does not sense the sensing target, and therefore considers that the sensing confidence level of the sensing node 4 is 0, and thus calculates that a difference between sensing confidence levels of the sensing node 4 and the sensing node 2 as Δ_{δ}=-0.85, and a difference between sensing confidence levels of the sensing node 4 and the sensing node 3 is Δ_{δ}=-0.5.

Further, based on the above differences between the sensing confidence levels of the sensing nodes, the sensing node 1 sends an accept-to-combine response instruction (i.e., ACP) and the L-1-1 of the sensing node 1 and the L-2-1 of the sensing node 2 of the corresponding sensing target to the sensing node 2; the sensing node 2 sends a reject-combine response instruction (i.e., REJ), L-2-1, and L-1-1 to the sensing node 1; the sensing node 2 sends a reject-combine response instruction REJ, L-2-1, and L-3-1 to the sensing node 3; the sensing node 2 sends a reject-combine response instruction REJ, L-2-1, and L-4-1 to the sensing node 4; the sensing node 3 sends an accept-to-combine response instruction ACP, L-3-1, and L-2-1 to the sensing node 2; the sensing node 3 sends a reject-combine response instruction REJ, L-3-1, and L-4-1 to the sensing node 4; the sensing node 4 sends an accept-to-combine response instruction ACP, L-4-1, and L-2-1 to the sensing node 2; and the sensing node 4 sends an accept-to-combine response instruction ACP, L-4-1, and L-3-1 to the sensing node 3.

In summary, only response instructions from adjacent sensing nodes received by the sensing node 2 are all ACP, and therefore the sensing node 2 is taken as the combine sensing node of the sensing target.

In some embodiments, after the sensing node 2 is determined as the combine sensing node, the combine sensing node sends information that the sensing node 2 has become the combine sensing node to the sensing node 1, the sensing node 3, and the sensing node 4 adjacent thereto, and the sensing node 1, the sensing node 3, and the sensing node 4 send an acknowledgement (ACK) to the combine sensing node (the sensing node 2).

Further, the sensing node 1, the sensing node 3, the sensing node 4, the sensing node 5, and the sensing node 6 associate their respective local identities of the unmanned aerial vehicle with a global identity of the unmanned aerial vehicle of the sensing node 2, and continue to sense the unmanned aerial vehicle and record a movement trajectory of the unmanned aerial vehicle.

In some embodiments, after the combine sensing node is determined, sensing nodes adjacent to the combine sensing node all become adjoint-sensing nodes of the combine sensing node.

For example, taking the sensing node 2 being the combine sensing node as an example, the sensing node 1, the sensing node 3, and the sensing node 4 are adjoint-sensing nodes of the combine sensing node.

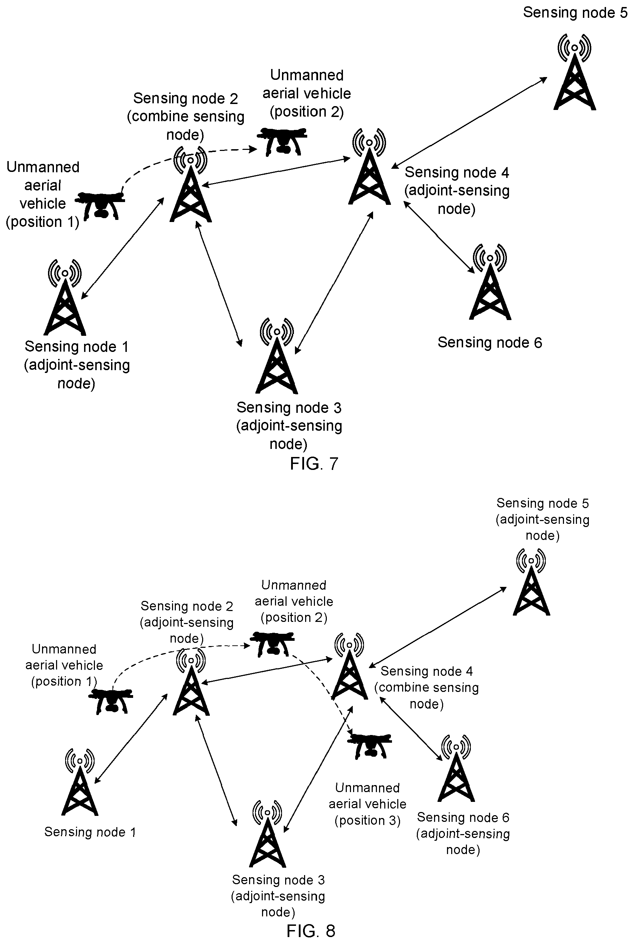

In some embodiments, after the unmanned aerial vehicle moves from the position 1, it is determined whether the combine sensing node needs to be switched according to a movement position of the unmanned aerial vehicle. Referring to FIG. 7, FIG. 7 is a schematic diagram of another distribution of sensing nodes according to some embodiments. As shown in FIG. 7, taking a case where the combine sensing node is the sensing node 2 and the unmanned aerial vehicle moves from the position 1 to a position 2 as an example, the sensing network of the sensing fusion system enters a mobility management phase.

In some embodiments, since the unmanned aerial vehicle leaves a sensing range of the sensing node 1, the sensing node 1 cannot sense the unmanned aerial vehicle, and the sensing node 1 sends a global identity G-1 and a request to combine (RTC) to the sensing node 2, but because there is no target trajectory of the unmanned aerial vehicle, the sensing confidence level is δ₁₋₁=0; the sensing node 3 sends the global identity G-1 and a target trajectory of the unmanned aerial vehicle, a sensing confidence level δ₃₋₁=0.4, and a request to combine (RTC) to the sensing node 2; the sensing node 4, after sensing the unmanned aerial vehicle, matches and finds that the unmanned aerial vehicle is the unmanned aerial vehicle already assigned with the global identity G-1, and therefore sends the global identity G-1 and the target trajectory of the unmanned aerial vehicle, a sensing confidence level δ₄₋₁=0.6, and a request to combine (RTC) to the sensing node 2; the sensing node 6 detects the unmanned aerial vehicle, assigns a local identity L-6-1 to the unmanned aerial vehicle, and obtains a corresponding sensing confidence level δ₃₋₁=0.3, and the sensing node 6 sends sensing information of the sensing target sensed by the sensing node 6 to the adjacent sensing node 4, and sends a request to combine (RTC).

Further, the sensing confidence level of the combine sensing node (the sensing node 2) for sensing the unmanned aerial vehicle is δ₂₋₁=0.5, and based on the global identity G-1 of the unmanned aerial vehicle, a difference between sensing confidence levels of the sensing node 2 and the sensing node 1 is calculated as Δδ=0.5, a difference between sensing confidence levels of the sensing node 2 and the sensing node 3 is calculated as Δδ=0.1, and a difference between sensing confidence levels of the sensing node 2 and the sensing node 4 is calculated Δδ=-0.1.

In some embodiments, the sensing node 4 matches and associates the sensing information of the unmanned aerial vehicle sent from the sensing node 6 with the unmanned aerial vehicle sensed by the sensing node 4, and finds that the unmanned aerial vehicle is an unmanned aerial vehicle already assigned with the global identity G-1, and a current combine sensing node of the unmanned aerial vehicle is the sensing node 2, and therefore considers that the sensing confidence level of the sensing target of the sensing node 6 is 0, and the sensing node 4 calculates a difference between sensing confidence levels of the sensing node 4 and the sensing node 6 as Δδ=0.6.

In some embodiments, whether to switch the combine sensing node may be determined based on a relationship between a difference between sensing confidence levels of the sensing nodes and a preset sensing confidence threshold.

As an example, the preset sensing confidence threshold may be -0.2.

In some embodiments, the sensing node 2 sends a reject-combine response instruction REJ and the global identity G-1 of the unmanned aerial vehicle to the sensing node 1; the sensing node 2 sends a reject-combine response instruction REJ and the global identity G-1 of the unmanned aerial vehicle to the sensing node 3; and the sensing node 2 sends a reject-combine response instruction REJ and the global identity G-1 of the unmanned aerial vehicle to the sensing node 4.

In some embodiments, if differences between sensing confidence levels of the combine sensing node and all adjoint-sensing nodes are all greater than a set threshold, the combine sensing node remains unchanged.

As an example, the adjoint-sensing node (the sensing node 4) sends a reject-combine response instruction REJ and the global identity G-1, L-4-1, and L-6-1 of the unmanned aerial vehicle to the sensing node 6. At this time, the adjoint-sensing node (the sensing node 4) considers that the sensing confidence level of the sensing information of the sensing node 6 is 0, and sends a reject-combine response instruction REJ to the sensing node 6, because the sensing node 6 is not adjacent to and has no interaction with the combine sensing node (the sensing node 2). In a case where the sensing node 6 also performs sensing on the unmanned aerial vehicle, if the sensing node 4 sends an accept-to-combine response instruction ACK to the sensing node 6, there will be a situation where two combine sensing nodes exist for the same sensing target in the sensing network. After receiving correlation information sent from the sensing node 4, the sensing node 6 knows that the unmanned aerial vehicle already has a combine sensing node and that the sensing node 6 itself is not adjacent to the combine sensing node, and thus there is no need to exchange the sensing information of the unmanned aerial vehicle subsequently.

It should be noted that the processing manner of the adjoint-sensing node (such as the sensing node 4) ensures the uniqueness of the combine sensing node corresponding to the sensing target and the stability of a mobility management strategy.

In some embodiments, after it is determined that the combine sensing node does not need to be switched, the combine sensing node (the sensing node 2) combines trajectory information of the unmanned aerial vehicle of all corresponding adjoint-sensing nodes to obtain combined sensing information, and reports the combined sensing information and the global identity G-1 of the unmanned aerial vehicle to a sensing center (SC). Meanwhile, the combine sensing node (the sensing node 2) reports the combined sensing information and the global identity G-1 of the unmanned aerial vehicle to all the adjoint-sensing nodes (the sensing node 1, the sensing node 3, and the sensing node 4).

In some embodiments, after the adjoint-sensing nodes (the sensing node 1, the sensing node 3, and the sensing node 4) receive the combined sensing information, they send an acknowledgement (ACK) to the combine sensing node (the sensing node 2). The sensing node 6 sends an acknowledgement (ACK) to the sensing node 4. All the sensing nodes associate corresponding local identity information and global identity information of the unmanned aerial vehicle, and continue to sense the unmanned aerial vehicle and record trajectory information of the unmanned aerial vehicle.

Referring to FIG. 8, FIG. 8 is a schematic diagram of another distribution of sensing nodes according to some embodiments. As shown in FIG. 8, taking a case where the combine sensing node is the sensing node 2 and the unmanned aerial vehicle moves from the position 1 to the position 2 and then to a position 3 as an example, the sensing network of the sensing fusion system continues the mobility management phase.

In some embodiments, since the unmanned aerial vehicle leaves the sensing range of the sensing node 1, the sensing node 1 cannot sense the unmanned aerial vehicle, and the sensing node 1 sends the global identity G-1 and a fusion request RTC to the sensing node 2, but there is no trajectory information of the unmanned aerial vehicle, and therefore a sensing confidence level is δ₁₋₁=0; the sensing node 3 sends the global identity G-1 of the unmanned aerial vehicle, a target trajectory of the sensing target, and a fusion request RTC to the sensing node 2, with a sensing confidence level δ₃₋₁=0.3; the sensing node 4 sends the global identity G-1 of the unmanned aerial vehicle, trajectory information of the unmanned aerial vehicle, and a fusion request RTC to the sensing node 2, with a sensing confidence level δ₄₋₁=0.9; although the sensing node 6 is capable of sensing the unmanned aerial vehicle at this time, since it has previously received the sensing information of the sensing node 4, it no longer sends the sensing information of the unmanned aerial vehicle to adjacent sensing nodes.

Further, the sensing confidence level of the sensing information of the combine sensing node (the sensing node 2) is δ₂₋₁=0.3 , and based on the global identity G-1 of the unmanned aerial vehicle, a difference between sensing confidence levels of the sensing node 2 and the sensing node 1 is calculated as Δδ=0.3, a difference between sensing confidence levels of the sensing node 2 and the sensing node 3 is calculated as Δδ=0, and a difference between sensing confidence levels of the sensing node 2 and the sensing node 4 is calculated as Δδ=-0.6.

In some embodiments, whether to switch the combine sensing node may be determined based on a relationship between a difference between sensing confidence levels of the sensing nodes and a preset sensing confidence threshold.

As an example, the preset sensing confidence threshold may be -0.2.

In some embodiments, the difference between sensing confidence levels between the sensing node 2 and the sensing node 4 is less than -0.2, and sensing node 4 has the highest sensing confidence level among all adjoint-sensing nodes. Therefore, the sensing node 2 sends an accept-to-combine response instruction ACP and the global identity G-1 of the unmanned aerial vehicle to the sensing node 4, while sending a reject-combine response instruction REJ and the global identity G-1 of the unmanned aerial vehicle to the remaining adjoint-sensing nodes (sensing node 1 and sensing node 3). At this point, the combine sensing node is switched, and sensing node 4 receives the ACP and becomes the new combine sensing node.

In some embodiments, after the sensing node 4 is determined as the new combine sensing node, the original combine sensing node (the sensing node 2) combines the trajectory information of the unmanned aerial vehicle of all the corresponding adjoint-sensing nodes to obtain combined sensing information, and reports the combined sensing information and the global identity G-1 of the unmanned aerial vehicle to the sensing center (SC). Meanwhile, the original combine sensing node (the sensing node 2) reports the combined sensing information, the global identity G-1 of the unmanned aerial vehicle, and information that the combine sensing node is switched to the new combine sensing node (the sensing node 4) to all the adjoint-sensing nodes (the sensing node 1, the sensing node 3, and the sensing node 4) of the sensing node 2.

Further, after the adjoint-sensing nodes (the sensing node 1, the sensing node 3, and the sensing node 4) of the sensing node 2 receive the combined information, they send an acknowledgement (ACK) to the original combine sensing node (the sensing node 2). All the sensing nodes associate the corresponding local identity information and global identity information of the unmanned aerial vehicle, and continue to sense the unmanned aerial vehicle and record the trajectory information of the unmanned aerial vehicle. The new combine sensing node (the sensing node 4) reports its own combine sensing node identity to its adjacent sensing nodes, and all its adjacent sensing nodes are converted into corresponding adjoint-sensing nodes (the sensing node 2, the sensing node 3, the sensing node 5, and the sensing node 6).

In some embodiments, regarding the combination of trajectory information of the sensing target and the construction of the global identity by the sensing network in the sensing fusion system, it may also be realized by means of sensing center control, that is, the sensing nodes respectively report the sensed sensing information to the sensing center, the sensing center designates a combine sensing node and may also designate corresponding adjoint-sensing nodes. As the sensing target moves in the sensing network, mobility management is realized by the sensing center based on the information of the combine sensing node and the adjoint-sensing nodes, and the switching of the combine sensing node is also decided and implemented by the sensing center, and corresponding sensing nodes are notified.

It should be noted that, the above-mentioned scenarios described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of the syetem architecture and the emergence of new service scenarios, the technical solutions provided in the embodiments of the present disclosure are also applicable to similar technical problems.

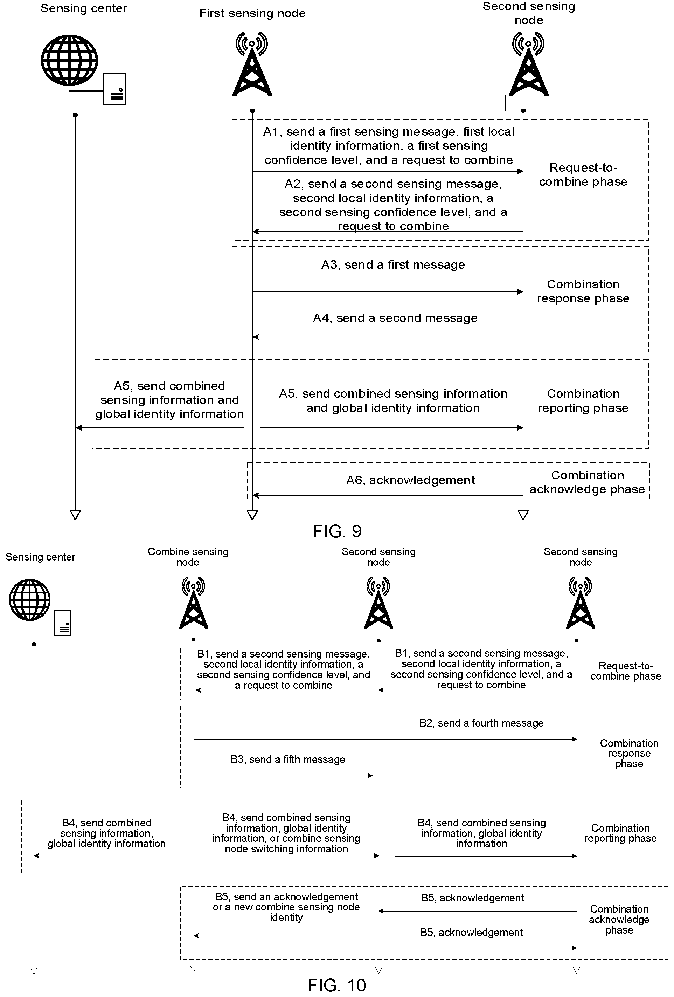

In some embodiments, the above S201-S203 may also be realized by a process as shown in FIG. 9. Referring to FIG. 9, FIG. 9 is a flowchart of another sensing fusion method provided in the embodiments of the present disclosure. As shown in FIG. 9, the method includes a request-to-combine phase, a combination response phase, a combination reporting phase, and a combination acknowledge phase, and includes the following steps: A1 to A6.

In A1, a first sensing node sends a first sensing message, first local identity information, a first sensing confidence level, and a request to combine to a second sensing node.

In some embodiments, in the request-to-combine phase, the first sensing node assigns a first local identity to the sensed sensing target, the first sensing node performs sensing on a sensing target via a sensing signal to obtain first sensing information, and determines a first sensing confidence level of the first sensing information.

Further, the first sensing node sends the first sensing message, the first local identity information, the first sensing confidence level, and the request to combine to the second sensing node.

In A2, the second sensing node sends a second sensing message, second local identity information, a second sensing confidence level, and a request to combine to the first sensing node.

In some embodiments, the second sensing node assigns a second local identity to the sensed sensing target, the second sensing node performs sensing on the sensing target via a sensing signal to obtain second sensing information, and determines a second sensing confidence level of the second sensing information.

In some embodiments, after the first sensing node receives the second sensing message, the second local identity information, the second sensing confidence level, and the request to combine sent from the second sensing node, the first sensing node matches and associates them with the first sensing message, the first local identity information, and the first sensing confidence level, and calculates a difference between the first sensing confidence level and the second sensing confidence level.

In some implementations, if the second sensing node does not sense the sensing target sensed by the first sensing node, the second sensing confidence level of the second sensing information is 0; if the first sensing node does not sense the sensing target sensed by the second sensing node, the first sensing confidence level of the first sensing information is 0.

In A3, the first sensing node sends a first message to the second sensing node.

The first message is used to request to take the first sensing node as a combine sensing node corresponding to the sensing target, where the first message includes the first sensing information, the first sensing confidence level, and the first local identity information of the sensing target, and the combine sensing node is a node responsible for combining sensing information of the sensing target.

As an example, in the combination response phase, the first sensing node sends the first message for rejecting combining to all second sensing nodes for which the difference between the first sensing confidence level and the second sensing confidence level is greater than a preset confidence threshold, and sends the first message of accept to combine to all second sensing nodes for which the difference between the first sensing confidence level and the second sensing confidence level is less than the preset confidence threshold.

In A4, the second sensing node sends a second message to the first sensing node.

The second message is a response message to the first message.

In some embodiments, if all messages in the second messages sent from second sensing nodes include an acceptance indication, the first sensing node is taken as the combine sensing node; if a rejection indication is included in the second message sent from the second sensing node, the first sensing node is not taken as the combine sensing node.

In some embodiments, after the first sensing node receives the second messages sent from the second sensing nodes, the first sensing node sends a third message to the second sensing nodes based on all the second messages including the acceptance indication.

The third message is used to indicate that the first sensing node is the combine sensing node.

In some embodiments, the third message includes the global identity information and second local identity information of the sensing target, where the second local identity information is used to locally identify the sensing target at the second sensing node.

In A5, the first sensing node sends combined sensing information and global identity information to the second sensing node and a sensing center.

In some embodiments, in the combination reporting phase, after taking the first sensing node as the combine sensing node, the first sensing node combines the first sensing information and the second sensing information to obtain combined sensing information, and assigns a global identity to the sensing target, and then sends the combined sensing information and the global identity information to the second sensing node and the sensing center.

In A6, the second sensing node sends an acknowledgement to the first sensing node.

In some embodiments, in the combination acknowledge phase, after the second sensing node receives the combined sensing information sent from the first sensing node (the combine sensing node), the second sensing node sends an acknowledgement to the first sensing node (the combine sensing node).

Further, the first sensing node associates the first local identity, the second local identity with the global identity of the sensing target, and continues to sense the sensing target and record a movement trajectory of the sensing target.

In some embodiments, the above S401-S402 may also be realized by a process as shown in FIG. 10. Referring to FIG. 10, FIG. 10 is a flowchart of another sensing fusion method according to some embodiments. As shown in FIG. 10, the method includes a request-to-combine phase, a combination response phase, a combination reporting phase, and a combination acknowledge phase, and includes the following steps: B1 to B5.

In B1, the second sensing node sends a second sensing message, second local identity information, a second sensing confidence level, and a request to combine to a combine sensing node.

In some embodiments, in the request-to-combine phase, the second sensing node assigns a second local identity to a sensed sensing target, the second sensing node performs sensing on a sensing target via a sensing signal to obtain second sensing information, and determines a second sensing confidence level of the second sensing information.

Further, the second sensing node sends the second sensing message, the second local identity information, the second sensing confidence level, and the request to combine to the combine sensing node.

In B2, the combine sensing node sends a fourth message to the second sensing node.

The fourth message is used to request the second sensing node to be as the combine sensing node of the sensing target, and the combine sensing node is a node responsible for combining sensing information of the sensing target.

In some embodiments, in the combination response phase, the combine sensing node calculates, based on the global identity information of the sensing target, a difference between a sensing confidence level of the combine sensing node and the second sensing confidence level of the second sensing node, and if the second sensing node does not sense the sensing target, the second sensing confidence level is 0.

Further, after the second sensing node acquires sensing information of a sensing node adjacent thereto, it matches and associates all the second sensing information with the sensing target, and if the sensing target already has a corresponding combine sensing node, the sensing confidence level of the sensing node adjacent thereto is 0.

In B3, the combine sensing node sends a fifth message to the second sensing node.

The fifth message is a response message to the fourth message.

As an example, the first sensing node determines, based on the first sensing confidence level and the second sensing confidence level, whether the second sensing node satisfies a condition for being as the combine sensing node.

The condition for the second sensing node for being as the combine sensing node includes: a difference between the first sensing confidence level and the second sensing confidence level being less than the preset confidence threshold.

In some embodiments, in a case where the second sensing node satisfies the condition for being as the combine sensing node, the fifth message including an acceptance indication is sent to the second sensing node; or in a case where the second sensing node does not satisfy the condition for being as the combine sensing node, the fifth message including a rejection indication is sent to the second sensing node.

In some embodiments, if there is a target second sensing node with the highest sensing confidence level and for which a difference between the sensing confidence level of the first sensing node for the sensing target and the sensing confidence level of the target second sensing node for the sensing target is less than a preset confidence threshold among second sensing nodes, the target second sensing node is determined as a new combine sensing node.

In B4, the combine sensing node sends combined sensing information, global identity information, or combine sensing node switching information to the sensing center and the second sensing node.

In some embodiments, in the combination reporting phase, after the new combine sensing node is determined, the combine sensing node assigns a global identity to the sensing target, combines the second sensing information of the second sensing nodes to obtain combined sensing information, and sends the combined sensing information and the global identity information to the sensing center and the second sensing nodes.

In some embodiments, if the combine sensing node is switched, combine sensing node switching information also needs to be sent to the second sensing nodes.

In B5, the second sensing node sends an acknowledgement or a new combine sensing node identity to the combine sensing node.

In some embodiments, in the combination acknowledge phase, after the second sensing node receives the combined sensing information and the global identity information, the second sensing node sends an acknowledgement to the combine sensing node, and if the combine sensing node is switched, the new combine sensing node identity also needs to be sent to the combine sensing node.

The solutions provided in the embodiments of the present disclosure are introduced above from the perspective of methods. It can be understood that, in order to implement the above functions, the sensing fusion apparatus includes at least one of corresponding hardware structures or software modules for implementing various functions. Those skilled in the art should easily realize that the embodiments of the present disclosure are able to be implemented in the form of hardware or a combination of hardware and computer software in combination with units and steps of algorithms described in the embodiments disclosed in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the embodiments of the present disclosure.

It can be understood that, in order to implement the above functions, the sensing fusion apparatus includes corresponding hardware structures and/or software modules for implementing various functions. Those skilled in the art should easily realize that the present disclosure may be implemented in the form of hardware or a combination of hardware and computer software in combination with algorithms and steps of various examples described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The sensing fusion apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

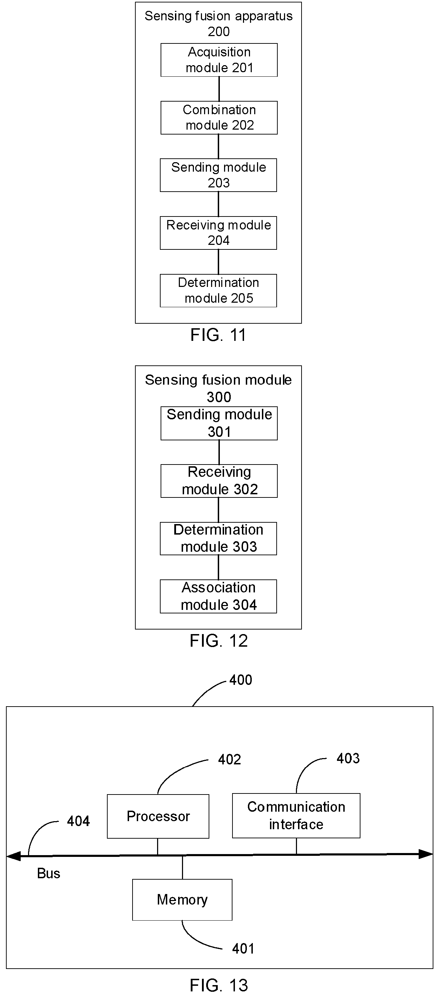

FIG. 11 is a structural schematic diagram of a sensing fusion apparatus according to some embodiments. The sensing fusion apparatus is applied to a first sensing node, and may perform the sensing fusion method provided in the above method embodiments. As shown in FIG. 11, the sensing fusion apparatus 200 includes: an acquisition module 201, a combination module 202, a sending module 203, a receiving module 204, and a determination module 205.

In some embodiments, the acquisition module 201 is configured to acquire first sensing information and second sensing information.

In some embodiments, the combination module 202 is configured to fuse the first sensing information and the second sensing information to obtain combined sensing information of a sensing target.

In some embodiments, the sending module 203 is configured to send the combined sensing information and global identity information of the sensing target to a second sensing node.

In some embodiments, the sending module 203 is further configured to send the combined sensing information and the global identity information of the sensing target to a sensing center.

In some embodiments, the sending module 203 is further configured to send a first message to the second sensing node.

In some embodiments, the receiving module 204 is configured to receive a second message sent from the second sensing node.

In some embodiments, the sending module 203 is further configured to send a third message to the second sensing node based on all second messages including acceptance indications.

In some embodiments, the receiving module 204 is further configured to receive a fourth message sent from the second sensing node.

In some embodiments, the sending module 203 is further configured to send a fifth message to the second sensing node.

In some embodiments, the sending module 203 is further configured to send the fifth message to the second sensing node based on a first sensing confidence level and a second sensing confidence level.

In some embodiments, the determination module 205 is configured to determine whether the second sensing node satisfies a condition for being as a combine sensing node based on the first sensing confidence level and the second sensing confidence level.

In some embodiments, the sending module 203 is further configured to send a fifth message including an acceptance indication to the second sensing node in response to the second sensing node satisfying the condition for being as the combine sensing node.

In some embodiments, the sending module 203 is further configured to send a fifth message including a rejection indication to the second sensing node in response to the second sensing node not satisfying the condition for being as the combine sensing node.

In some embodiments, the determination module 205 is further configured to determine that there is a target second sensing node from all second sensing nodes.

In some embodiments, the sending module 203 is further configured to send a sixth message to all the second sensing nodes.

FIG. 12 is a structural schematic diagram of another sensing fusion apparatus according to some embodiments. The sensing fusion apparatus 300 is applied to a second sensing node, and may perform the sensing fusion method provided in the above method embodiments. As shown in FIG. 12, the sensing fusion apparatus 300 includes: a sending module 301, a receiving module 302, a determination module 303, and an association module 304.

In some embodiments, the sending module 301 is configured to send second sensing information to a first sensing node.

In some embodiments, the receiving module 302 is configured to receive combined sensing information and global identity information of a sensing target sent from the first sensing node.

In some embodiments, the receiving module 302 is further configured to receive a first message sent from the first sensing node.

In some embodiments, the sending module 301 is further configured to send a second message to the first sensing node.

In some embodiments, the sending module 301 is further configured to send the second message to the first sensing node based on a first sensing confidence level and a second sensing confidence level.

In some embodiments, the determination module 303 is configured to determine whether the first sensing node satisfies a condition for being as a combine sensing node based on the first sensing confidence level and the second sensing confidence level.

In some embodiments, the sending module 301 is further configured to send a second message including an acceptance indication to the first sensing node in response to the first sensing node satisfying the condition for being as the combine sensing node.

In some embodiments, the sending module 301 is further configured to send a second message including a rejection indication to the first sensing node in response to the first sensing node not satisfying the condition for being as the combine sensing node.

In some embodiments, the receiving module 302 is further configured to receive a third message sent from the first sensing node.

In some embodiments, the association module 304 is configured to establish an association relationship between the global identity information and second local identity information.

In some embodiments, the receiving module 302 is further configured to receive a sixth message sent from the first sensing node.

In some embodiments, the receiving module 302 is further configured to, after determining the first sensing node being as the combine sensing node of the sensing target, receive a seventh message sent from a third sensing node.

In some embodiments, the sending module 301 is further configured to send an eighth message including a rejection indication to the third sensing node.

In a case where the functions of the above-mentioned integrated modules are implemented in the form of hardware, a structure of a communication apparatus involved in the above-mentioned embodiments is provided in the embodiments of the present disclosure. As shown in FIG. 13, the communication apparatus 400 includes: a processor 402 and a bus 404. In some embodiments, the communication apparatus 400 may further include a memory 401; in some embodiments, the communication apparatus 400 may further include a communication interface 403.

The processor 402 may implement or perform various exemplary logical blocks, modules and circuits described in combination with the embodiments of the present disclosure. The processor 402 may be a central processor, a general-purpose processor, a digital signal processor, an application specific integrated circuit, a field programmable gate array, or other programmable logic component, a transistor logic component, a hardware assembly, or any combination thereof. The processor 402 may implement or perform various exemplary logical blocks, modules and circuits described in combination with the embodiments of the present disclosure. The processor 402 may also be a combination that implements computing functions, for example, the processor 402 includes a combination of one or more microprocessors, a combination of a DSP (digital signal processor) and a microprocessor, or the like.

The communication interface 403 is configured to connect to other devices through a communication network. The communication network may be the Ethernet, a radio access network, a wireless local area network (WLAN), or the like.

The memory 401 may be a read-only memory (ROM) or other types of static storage devices that can store static information and instructions, a random access memory (RAM), or other types of dynamic storage devices that are capable of storing information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

As a possible implementation, the memory 401 may exist independently from the processor 402, and the memory 401 may be connected to the processor 402 through the bus 404, and is configured to store instructions or program codes. In a case where the processor 402 invokes and executes the instructions or program codes stored in the memory 401, the sensing fusion method provided in the embodiments of the present disclosure may be implemented.

In another implementation, the memory 401 may also be integrated with the processor 402.

The bus 404 may be an extended industry standard architecture (EISA) bus, or the like. The bus 404 may be classified as an address bus, a data bus, a control bus, or the like. For ease of representation, only one bold line is used in FIG. 13 for representing the bus, which however does not mean that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the sensing fusion method as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the sensing fusion method as described in any one of the above-mentioned embodiments.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. A sensing fusion method, **characterized in that** the method is performed by a first sensing node, and the method comprises:
acquiring first sensing information and second sensing information, wherein the first sensing information is sensing information obtained by the first sensing node performing sensing on a sensing target, and the second sensing information is sensing information obtained by a second sensing node performing sensing on the sensing target;
combining the first sensing information and the second sensing information to obtain combined sensing information of the sensing target; and
sending the combined sensing information and global identity information of the sensing target to the second sensing node, wherein the global identity information is used to identify the sensing target in a sensing network.

2. The method according to claim 1, further comprising:
sending the combined sensing information and the global identity information of the sensing target to a sensing center.

3. The method according to claim 1, further comprising:
sending a first message to the second sensing node, wherein the first message is used to request to take the first sensing node as a combine sensing node corresponding to the sensing target, and the combine sensing node is a node responsible for combining sensing information of the sensing target; and
receiving a second message sent from the second sensing node, wherein the second message is a response message to the first message.

4. The method according to claim 3, further comprising:
sending a third message to the second sensing node based on all second messages comprising acceptance indications, wherein the third message is used to indicate that the first sensing node is the combine sensing node.

5. The method according to claim 3, wherein the first message comprises first sensing information, a first sensing confidence level, and first local identity information of the sensing target; wherein the first sensing confidence level is a confidence level of the first sensing information, and the first local identity information is used to locally identify the sensing target at the first sensing node.

6. The method according to claim 4, wherein the third message comprises the global identity information and second local identity information of the sensing target, and the second local identity information is used to locally identify the sensing target at the second sensing node.

7. The method according to claim 6, wherein the third message further comprises the combined sensing information.

8. The method according to claim 1, further comprising:
receiving a fourth message sent from the second sensing node, wherein the fourth message is used to request the second sensing node to be as a combine sensing node of the sensing target, and the combine sensing node is a node responsible for combining sensing information of the sensing target; and
sending a fifth message to the second sensing node, wherein the fifth message is a response message to the fourth message.

9. The method according to claim 8, wherein the fourth message comprises the second sensing information, a second sensing confidence level, and second local identity information of the sensing target; wherein the second sensing confidence level is a confidence level of the second sensing information, and the second local identity information is used to locally identify the sensing target at the second sensing node.

10. The method according to claim 8, wherein sending the fifth message to the second sensing node comprises:
sending the fifth message to the second sensing node based on a first sensing confidence level and a second sensing confidence level.

11. The method according to claim 10, wherein sending the fifth message to the second sensing node based on the first sensing confidence level and the second sensing confidence level comprises:
determining whether the second sensing node satisfies a condition for being as the combine sensing node based on the first sensing confidence level and the second sensing confidence level;
in response to the second sensing node satisfying the condition for being as the combine sensing node, sending the fifth message comprising an acceptance indication to the second sensing node; or in response to the second sensing node not satisfying the condition for being as the combine sensing node, sending the fifth message comprising a rejection indication to the second sensing node.

12. The method according to claim 11, wherein the condition for the second sensing node for being as the combine sensing node comprises: a difference between the first sensing confidence level and the second sensing confidence level being less than a preset confidence level threshold.

13. The method according to claim 12, wherein in response to the first sensing node having already been the combine sensing node, the condition for the second sensing node for being as the combine sensing node further comprises: the second sensing confidence level of the second sensing node being a maximum value among second sensing confidence degrees of all second sensing nodes.

14. The method according to claim 3, further comprising:
determining that there is a target second sensing node from all second sensing nodes, wherein the target second sensing node is a sensing node with a highest sensing confidence level for the sensing target among all the second sensing nodes, and a difference between a sensing confidence level of the first sensing node for the sensing target and a sensing confidence level of the target second sensing node for the sensing target is less than a preset confidence level threshold; and
sending a sixth message to all the second sensing nodes; wherein the sixth message is used to indicate that the combine sensing node is switched from the first sensing node to the target second sensing node.

15. The method according to claim 14, wherein the sixth message comprises: a node identifier of the target second sensing node and the global identity information of the sensing target.

16. The method according to claim 1, wherein the second sensing node satisfies at least one of the following:
there being an overlapping area between a sensing area of the second sensing node and a sensing area of the first sensing node; or
a distance between the second sensing node and the first sensing node being less than a preset distance threshold.

17. A sensing fusion method, **characterized in that** the method is performed by a second sensing node, and the method comprises:
sending second sensing information to a first sensing node, wherein the second sensing information is sensing information obtained by the second sensing node performing sensing on a sensing target; and
receiving combined sensing information and global identity information of the sensing target sent from the first sensing node; wherein the combined sensing information is obtained by combining first sensing information and the second sensing information; the first sensing information is sensing information obtained by the first sensing node performing sensing on the sensing target; and the global identity information is used to identify the sensing target in a sensing network.

18. The method according to claim 17, further comprising:
receiving a first message sent from the first sensing node, wherein the first message is used to request to take the first sensing node as a combine sensing node corresponding to the sensing target, and the combine sensing node is a node responsible for combining sensing information of the sensing target; and
sending a second message to the first sensing node, wherein the second message is a response message to the first message.

19. The method according to claim 18, wherein the first message comprises first sensing information, a first sensing confidence level, and first local identity information of the sensing target; wherein the first sensing confidence level is a confidence level of the first sensing information, and the first local identity information is used to locally identify the sensing target at the first sensing node.

20. The method according to claim 19, wherein sending the second message to the first sensing node comprises:
sending the second message to the first sensing node based on the first sensing confidence level and a second sensing confidence level, wherein the second sensing confidence level is a confidence level of the second sensing information.

21. The method according to claim 20, wherein sending the second message to the first sensing node based on the first sensing confidence level and the second sensing confidence level comprises:
determining whether the first sensing node satisfies a condition for being as the combine sensing node based on the first sensing confidence level and the second sensing confidence level;
in response to the first sensing node satisfying the condition for being as the combine sensing node, sending the second message comprising an acceptance indication to the first sensing node; or in response to the first sensing node not satisfying the condition for being as the combine sensing node, sending the second message comprising a rejection indication to the first sensing node.

22. The method according to claim 21, wherein the condition for the first sensing node for being as the combine sensing node comprises: a difference between the first sensing confidence level and the second sensing confidence level being less than a preset confidence level threshold.

23. The method according to claim 18, further comprising:
receiving a third message sent from the first sensing node, wherein the third message is used to indicate that the first sensing node is the combine sensing node.

24. The method according to claim 23, wherein the third message comprises the global identity information and second local identity information of the sensing target, and the second local identity information is used to locally identify the sensing target at the second sensing node.

25. The method according to claim 24, further comprising:
establishing an association relationship between the global identity information and the second local identity information.

26. The method according to claim 17, further comprising:
receiving a sixth message sent from the first sensing node; wherein the sixth message is used to indicate that the combine sensing node of the sensing target is switched from the first sensing node to a target second sensing node, and the combine sensing node is a node responsible for combining sensing information of the sensing target.

27. The method according to claim 26, wherein the sixth message comprises: a node identifier of the target second sensing node and the global identity information of the sensing target.

28. The method according to claim 17, further comprising:
after determining the first sensing node being as the combine sensing node of the sensing target, receiving a seventh message sent from a third sensing node, wherein the seventh message is used to request to take the third sensing node as the combine sensing node, and the combine sensing node is a node responsible for combining sensing information of the sensing target; and
sending an eighth message including a rejection indication to the third sensing node, wherein the eighth message is a response message to the seventh message.

29. A communication apparatus, **characterized by** comprising: a memory and a processor; wherein the memory is coupled to the processor; the memory is configured to store instructions executable for the processor; and the processor, upon executing the instructions, performs the method according to any one of claims 1 to 16, or performs the communication method according to any one of claims 17 to 28.

30. A computer-readable storage medium, **characterized in that** the computer-readable storage medium stores computer instructions thereon, and in response to the computer instructions being run on a computer, the computer is enabled to perform the method according to any one of claims 1 to 16, or to perform the method according to any one of claims 17 to 28.
